# DEMANDE DE BREVET EUROPEEN

(11) **EP 0 803 839 A1**
(43) Date de publication de la demande: **29.10.1997**
(21) Numéro de dépôt: 97400848.4
(22) Date de dépôt: 15.04.1997
(51) Int. Cl.: G06K 19/07, G06K 19/077

(54) **Carte à circuit intégré sans contact avec antenne en polymère conducteur**

(30) Priorité: 23.04.1996 FR 9605097
(71) Demandeur: SOLAIC, 92120 Montrouge (FR)
(72) Inventeur: Gaumet, Michel, 45560 Saint-Denis-En-Val (FR); Thevenot, Benoît, 45160 Olvet (FR)
(74) Mandataire: Fruchard, Guy

(57) **Abrégé**

Carte à circuit intégré comportant un corps de carte (1), un circuit intégré (2) fixé dans une cavité du corps de carte, une antenne (3) s'étendant sur une face du corps de carte et reliée au circuit intégré, et une couche de résine (4) recouvrant le circuit intégré (2) et au moins une partie du corps de carte immédiatement adjacente au circuit intégré.

## Description

La présente invention concerne une carte à circuit intégré.

On connaît des cartes à circuit intégré dites cartes sans contact comportant un corps de carte en matière plastique, un circuit intégré fixé dans une cavité du corps de carte, et une antenne s'étendant sur une face du corps de carte et reliée au circuit intégré. Il est connu de réaliser l'antenne par dépôt d'un polymère conducteur, en particulier par sérigraphie.

Dans toutes les cartes sans contact connues il est prévu de recouvrir le circuit intégré et l'antenne par une feuille de recouvrement qui assure un maintien du circuit intégré dans la cavité du corps de carte et une protection de l'antenne ainsi que de sa liaison avec les plots du circuit intégré.

La mise en place de la feuille de recouvrement est généralement effectuée par laminage à chaud. Afin de réduire le coût de fabrication il est généralement prévu de réaliser simultanément plusieurs cartes en implantant plusieurs circuits intégrés sur une même feuille de matière plastique puis en réalisant simultanément les antennes associées à chaque circuit intégré. Une feuille de recouvrement est ensuite disposée sur la planche ainsi obtenue et l'ensemble est disposé dans une presse de laminage où la planche et la feuille de recouvrement associée sont chauffées et mises sous pression. L'ensemble obtenu est ensuite découpé pour séparer les différentes cartes.

En dépit de l'économie obtenue par la réalisation simultanée de plusieurs cartes, la mise en place d'une feuille de recouvrement reste très onéreuse en raison de l'investissement important que représente une presse de laminage et de la durée relativement longue (environ 20 minutes) de l'opération de laminage de la feuille de recouvrement sur le corps de carte. En outre, l'opération de laminage de la feuille de recouvrement représente un goulot d'étranglement par rapport aux autres étapes de fabrication d'une carte et constitue un obstacle à des cadences de fabrication élevées.

Par ailleurs la concurrence sans cesse croissante implique une recherche perpétuelle de réduction des coûts tandis que les exigences concernant la fiabilité de fonctionnement des cartes ne cesse d'augmenter.

Les fabricants de cartes sont donc continuellement confrontés à la recherche de deux objectifs contradictoires que sont l'abaissement du coût de fabrication et le maintien d'une qualité suffisante des produits obtenus.

Selon l'invention on propose une carte à circuit intégré comportant un corps de carte, un circuit intégré fixé dans une cavité du corps de carte, une antenne en polymère conducteur s'étendant sur une face du corps de carte et reliée au circuit intégré, et une couche de résine recouvrant le circuit intégré et au moins une partie du corps de carte immédiatement adjacente au circuit intégré.

Ainsi, le dépôt de la résine de protection pouvant être effectué en continu, par exemple par sérigraphie, cette opération est réalisée à faible coût tout en assurant une protection d'au moins la zone de la carte qui est la plus susceptible d'être à l'origine d'une mise hors service de la carte. On réalise ainsi un compromis satisfaisant entre la recherche d'un moindre coût et le maintien d'une bonne fiabilité.

On remarquera que dans le cas d'une antenne de faibles dimensions, ou dans le cas d'une antenne superposée au circuit intégré, la réalisation d'une couche de résine sur le circuit intégré ainsi que la partie du corps de carte immédiatement adjacente, permet de recouvrir l'ensemble des éléments formant la partie sensible de la carte à circuit intégré de sorte que l'on obtient une diminution de coût sans aucune perte de fiabilité par rapport aux systèmes existants.

Selon une version avantageuse de l'invention le circuit intégré a une épaisseur inférieure à 120 µm et est disposé sensiblement au voisinage d'une fibre neutre de la carte à l'aplomb de la couche de résine. Ainsi la très faible épaisseur du circuit intégré donne à celui-ci une très grande souplesse minimisant les contraintes lors d'une flexion de la carte, et sa disposition au voisinage de la fibre neutre de la carte diminue encore les contraintes en particulier au voisinage du bord du circuit intégré où il existe un plus grand risque de rupture de l'antenne, de sorte que cette version avantageuse de l'invention permet encore d'augmenter la fiabilité sans augmenter le coût de la carte à circuit intégré.

D'autres caractéristiques et avantages de l'invention apparaîtront à la lecture de la description qui suit d'un mode de réalisation particulier non limitatif de l'invention en relation avec la figure unique ci-jointe qui est une vue en coupe de la carte sans contact selon l'invention.

En référence à la figure, la carte sans contact selon l'invention comporte d'une façon connue en soi un corps de carte 1 en matière plastique, un circuit intégré 2 fixé dans une cavité du corps de carte, par exemple par enfoncement à chaud du circuit intégré dans le corps de carte, et une antenne 3 s'étendant sur une face du corps de carte et reliée au circuit intégré. De façon connue en soi le circuit intégré affleure l'une des faces du corps de carte et l'antenne 3 est par exemple réalisée sous forme d'une série de spires de polymère conducteur déposé par sérigraphie sur la face du corps de carte 1 affleurée par le circuit intégré 2.

Selon l'invention la carte sans contact comporte une couche de résine 4 recouvrant le circuit intégré 2 et au moins une partie du corps de carte immédiatement adjacente au circuit intégré.

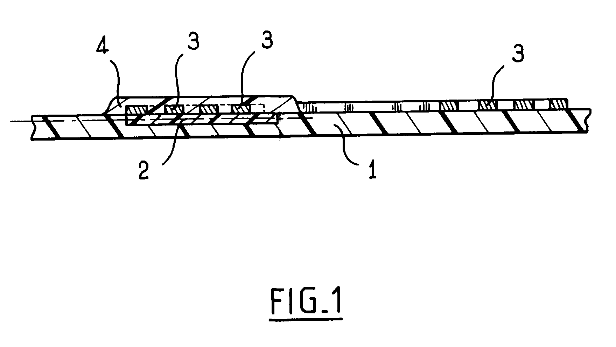

Selon un aspect avantageux de l'invention, le circuit intégré 2 a une faible épaisseur, de préférence inférieure à environ 120 µm et est disposé sensiblement au voisinage de la fibre neutre de la carte à l'aplomb de la couche de résine 4, symbolisée par un trait fin mixte sur la figure 1. On minimise ainsi les contraintes auxquelles le circuit intégré, et surtout les liaisons du circuit intégré avec l'antenne, sont soumis lors de la mise en place de la carte sans contact selon l'invention sur un objet.

Bien entendu l'invention n'est pas limitée au mode de réalisation décrit et on peut y apporter des variantes de réalisation sans sortir du cadre de l'invention tel que défini par les revendications.

En particulier, bien que l'invention ait été illustrée en relation avec une carte dans laquelle la couche de résine 4 ne recouvre pas totalement l'antenne 3, on peut prévoir une couche de résine 4 recouvrant totalement l'ensemble circuit intégré - antenne, ou même la totalité de la face correspondante du corps de carte.

Bien que l'invention ait été illustrée en relation avec une carte sans contact comprenant une antenne inductive, l'antenne peut également être un élément de couplage capacitif ou tout élément de couplage permettant une transmission de signaux sans contact.

## Revendications

1. Carte à circuit intégré comportant un corps de carte (1), un circuit intégré (2) fixé dans une cavité du corps de carte et une antenne (3) en polymère conducteur s'étendant sur une face du corps de carte et reliée au circuit intégré, caractérisée en ce qu'elle comporte une couche de résine (4) recouvrant le circuit intégré (2) et au moins une partie du corps de carte immédiatement adjacente au circuit intégré.

2. Carte à circuit intégré selon la revendication 1, caractérisée en ce que le circuit intégré (2) a une épaisseur inférieure à 120 µm et est disposé sensiblement au voisinage de la fibre neutre de la carte à l'aplomb de la couche de résine (4).
